# EUROPEAN PATENT APPLICATION

(11) **EP 3 722 073 A1**
(43) Date of publication of application: **14.10.2020**
(21) Application number: 19168736.7
(22) Date of filing: 11.04.2019
(51) Int. Cl.: B29C 64/112, B29C 64/386, B29D 11/00, B33Y 10/00

(54) **METHOD FOR PRINTING AN OPTICAL COMPONENT**

(71) Applicant: Luxexcel Holding B.V., 5656 AE Eindhoven (NL)
(72) Inventor: Verheyen, Tom, 5656 AE Eindhoven (NL)
(74) Representative: Loock, Jan Pieter

(57) **Abstract**

A method for printing a three-dimensional optical component (1), in particular an ophthalmic lens, comprising the following steps: virtually slicing the intended three-dimensional shape (2) of the optical component (1) into two-dimensional slices (3) of a height h, resulting in an approximate shape (4); determining an approximation error e quantifying the difference between the intended shape (2) and the approximate shape (4); building up the three-dimensional component (1) from layers of printing ink, wherein for each slice a layer is printed, wherein each layer is obtained through a targeted placement of droplets of printing ink at least partially side by side wherein, depending on the approximation error, the slicing and/or printing pattern of the corresponding slice is adjusted such that the absolute value of the approximation error e is reduced.

## Description

### BACKGROUND

The present invention relates to a method for printing a three-dimensional optical component, in particular an ophthalmic lens, comprising the following steps: virtually slicing the intended three-dimensional shape of the optical component into two-dimensional slices of a height h, resulting in an approximate shape; determining an approximation error e quantifying the difference between the intended shape and the approximate shape; building up the three-dimensional component from layers of printing ink, wherein for each slice a layer is printed, wherein each layer is obtained through a targeted placement of droplets of printing ink at least partially side by side.

Printing three-dimensional optical components such as ophthalmic lenses is known from the prior art. In three-dimensional printing, a three-dimensional structure is approximated by a stack of two-dimensional slices forming the printable layers. These layers are deposited through a targeted placement of droplets of printing ink at least partially side by side from the ejection nozzles of a print head. The layers are printed at least partially above each other such as to form the intended three-dimensional structure. It is inherent to such a layered construction that errors result from the approximation of the intended shape of the structure to be printed by the stack of two-dimensional slices.

This error is particularly detrimental and pronounced in printing optical components, in particular ophthalmic lenses. The generally curved surface of these components is approximated through the stepped structure of the deposited layers. The deviation between the intended and the approximated shape is largest in the vicinity of and at the optical centre of the lens, i.e. where the highest accuracy is required.

The extent of the approximation error e is linked to the height h of the slices which in turn is a reflection of the volume of the ejected droplets and hence tied to the properties of the print head and printing ink. Reducing the volume of ejected droplets changes the aerodynamic behaviour of these droplets, in particular their flight properties, hence affecting the overall print. In addition to these technical problems, simply reducing the height h of the slices, even if it was technically feasible, would result in prolonged printing times.

### SUMMARY

Hence, it is a purpose of the present invention to provide a method for printing three-dimensional optical components, in particular ophthalmic lenses, with a reduced approximation error e while at the same time maintaining attractive printing times and avoiding a re-design of the overall printing method and printing apparatus.

According to the present invention, this object is achieved by a method for printing a three-dimensional optical component, in particular an ophthalmic lens, comprising the following steps: virtually slicing the intended three-dimensional shape of the optical component into two-dimensional slices of a height h, resulting in an approximate shape; determining an approximation error e quantifying the difference between the intended shape and the approximate shape; building up the three-dimensional component from layers of printing ink, wherein for each slice a layer is printed, wherein each layer is obtained through a targeted placement of droplets of printing ink at least partially side by side, wherein depending on the approximation error e, the layer corresponding to at least one slice is printed in multi-pass mode, i.e. the corresponding multi-pass slice is divided into multiple sub-slices and their corresponding sublayers are printed in consecutive sublayer printing steps.

Through an adjustment of the slicing and printing process for at least one slice depending on the approximation error e of that slice, an advantageous balance between printing speed and printing accuracy can be achieved. Higher accuracy is achieved through slicing and printing processes which give more flexibility to the approximation of the intended shape. More accurate slicing and printing processes are applied depending on the approximation error e, e.g. for those slice with an absolute value of the approximation error e above a defined threshold, hence reducing the absolute value of that approximation error e, resulting in an optical component of increased accuracy. More time intensive but also more accurate printing methods are reserved to those slices which need most improvement, hence resulting in a printing method with maximum speed at the defined accuracy.

Through the division of the at least one slice into multiple sub-slices, a better approximation of the intended shape through the stack of slices is obtained. Hence, the absolute value of the approximation error e of the adjusted at least one slice is reduced as compared to the original at least one slice. In this way, an optical component, in particular an ophthalmic lens, of increased accuracy and quality is provided. Printing in multi-pass mode is more time consuming than printing in single-pass mode. Another drawback of multi-pass printing are abberations (ghosting) caused by the multiple sub-layers. Reserving multi-pass printing to those slices with an absolute value of the approximation error e above a certain threshold, allows to minimize the detrimental effects of multi-pass printing: prolonged printing times and unwanted optical artefacts such as abberations. Further, by choosing an error threshold, a desired balance between speed and accuracy can be defined.

Optical components in the sense of the present invention comprise lenses, in particular ophthalmic lenses. Ophthalmic lenses comprise concave, convex, biconcave, biconvex and meniscus lenses. Ophthalmic lenses in the sense of the present invention also comprise multifocal lenses as well as gradient-index lenses.

In the sense of the present invention, printing of an optical component comprises building up the component from layers of printing ink. These are obtained through a targeted placement of droplets of printing ink at least partially side by side. The droplets of printing ink are ejected from the nozzles of a print head, typically towards a substrate. The printing ink preferably comprises a translucent or transparent component. Preferably, the printing ink comprises at least one photo-polymerizable component. The at least one photo-polymerizable component is preferably a monomer that polymerizes upon exposure to radiation, e.g. ultra-violet (UV) light. The deposited droplets are preferably pin cured, i.e. partially cured, after deposition. Preferably, the viscosity of at least one component of the printing ink is increased. Pin curing is preferably carried out after deposition of the respective droplet or after deposition of an entire or only part of a layer. Alternatively, pin curing is carried out at certain intervals, e.g. after printing of every second layer.

Targeted placement of droplets of printing ink is obtained through the ejection of said droplets from nozzles of a print head. Preferably, the droplets are ejected towards a substrate. Droplets of layers constituting the second and following layers are at least partly ejected towards the previously deposited layer, such that the three-dimensional structure is built up layer by layer.

Virtual slicing comprises the approximation of the intended shape into a stack of two-dimensional slices. The slices have a defined height h. Preferably, the height h of all slices is equal, e.g. defined by the volume of droplets ejected by the print head in use. Alternatively or additionally, the height h is defined by the aspired printing time. Preferably, the slices have a flat front and back surface, which are identical to each other. Particularly preferably, the slices are parallel to each other and do not intersect.

The approximation error e is preferably determined as the difference between intended shape and approximate shape. E.g. the approximation error e quantifies the height difference between the intended shape and the approximate shape along a, preferably vertical, cross section of the optical component. Here and in the following, "vertical" refers to the direction of the gravitational field.

An error threshold is preferably defined e.g. depending on the desired balance between printing speed and printing accuracy. In this way, the balance between speed and accuracy can be advantageously defined. E.g. multi-pass printing is reserved to those slices, wherein the approximation error e or its absolute value exceed the error threshold.

According to a preferred embodiment, the number of sub-slices and the height of the respective sub-slices are chosen such that the absolute value of the approximation error e of the at least one slice is reduced. The heights of the sub-slices of the at least one slice sum up to the height h of that slice. Preferably, a sublayer of a defined height is achieved by reducing the density of deposited droplets and/or the droplet volume. E.g. a sublayer with x% the height h of the original layer is obtained by printing the sublayer using a printing pattern, wherein only at x% of the volume elements droplets of printing ink are deposited.

According to a preferred embodiment, the height of the sub-slices does not increase from the first printed sub-slice to the last printed sub-slice, i.e. the height of two sub-slices printed consecutively decreases or is the same. This is particularly advantageous for optical components with convex sections as the dome-shape of these sections is best approximated through a stack of slices of non-increasing height.

According to a preferred embodiment, the at least one multi-pass layer is pin cured with a reduced pinning intensity as compared to the layers which are not printed in multi-pass mode. By reducing the pin intensity for the at least one multi-pass layer allows the respective layer to dissolve into one smooth layer with reduced thickness.

According to the present invention, the object is likewise achieved by a method for printing a three-dimensional optical component, in particular an ophthalmic lens, comprising the following steps: virtually slicing the intended three-dimensional shape of the optical component into two-dimensional slices of a height h, resulting in an approximate shape; determining an approximation error e quantifying the difference between the intended shape and the approximate shape; providing a printing pattern for each slice determining at which volume elements (voxels) droplets of printing ink are deposited; building up the three-dimensional component from layers of printing ink, wherein for each slice a layer is printed, wherein each layer is obtained through a targeted placement of droplets of printing ink at least partially side by side according to the provided printing patterns, wherein, depending on the approximation error e, for at least one slice, the printing pattern is adjusted such that the adjusted printing pattern comprises a first sub-pattern determining volume elements at which droplets of a first volume are to be deposited and a second sub-pattern determining volume elements at which droplets of a second volume are to be deposited, wherein the first volume is larger than the second volume.

As detailed above, through the adjustment of the printing pattern, a better approximation of the intended shape is obtained and the absolute value of the resulting approximation error e hence reduced. In this way, an optical component of enhanced optical quality is provided. Similar to using multi-pass mode, using a first and a second sub-pattern for slices depending on the approximation error e, e.g. with an absolute value of the approximation error e above a defined threshold, gives a larger flexibility in approximating the intended shape. Preferably, the adjusted printing pattern provides for at least one slice with a first height h₁ in the region of the first sub-pattern and a second height h₂ in the region of the second sub-pattern, wherein h₁ is larger than h₂. Particular preferably, h₁=h. The increased flexibility is particularly important and beneficial for ophthalmic lenses in the vicinity of and at the optical centre. Preferably, the droplets of the first volume are ejected from a first set of nozzles of a print head and the droplets of the second volume are ejected from a second set of nozzles of a, preferably different, print head. Alternatively, both sets of nozzles are part of the same print head.

An error threshold is preferably defined e.g. depending on the desired balance between printing speed and printing accuracy. In this way, the balance between speed and accuracy can be advantageously defined. Preferably, adjustment of the printing pattern is reserved to those slices, wherein the approximation error e or its absolute value exceed the error threshold.

According to a preferred embodiment, the first and second sub-pattern are adjusted such that the absolute value of the approximation error e of the at least one slice is reduced through the adjustment of the printing pattern. Preferably, the first sub-pattern is restricted to those regions of the at least one slice where the height of the approximate shape is lower or equal to the height of the intended shape and the second sub-pattern is restricted to those regions of the at least one slice where the height of the approximate shape exceeds the height of the intended shape.

According to a preferred embodiment, the second sub-pattern comprises the edges of the at least one slice. When approximating the optical component, in particular when approximating convex sections of optical components, the edges of the slices generally extend over the intended shape, i.e. a surplus of volume is created in these areas. By providing a second sub-pattern at the edges, wherein the second sub-pattern comprises droplets of a reduced volume, a region of reduced height h₂ is advantageously provided and a better approximation obtained. The second sub-pattern hence introduces an additional step at the edges of the at least one slice.

According to a preferred embodiment, the first sub-pattern comprises a black pattern and the second sub-pattern comprises a greyscale pattern, wherein black pixels refer to volume elements on which droplets of the first volume are deposited, grey pixels of the pattern refer to volume elements on which droplets of the second volume are deposited and white pixels refer to volume elements on which no droplets are deposited. In this way, a particularly simple adjustment of the printing pattern of the at least one slice is carried out. For example, the adjusted printing pattern of the at least one slice can be obtained from the original printing pattern of that slice by colouring the edge regions of the slice in grey, leaving the remaining part of the pattern black and white, respectively.

According to the present invention, this object is likewise achieved by a method for printing a three-dimensional optical component, in particular an ophthalmic lens, comprising the following steps: virtually slicing the intended three-dimensional shape of the optical component into two-dimensional slices of a height h, resulting in an approximate shape; determining an approximation error e quantifying the difference between the intended shape and the approximate shape; providing a printing pattern for each slice determining at which volume elements (voxels) droplets of printing ink are deposited; building up the three-dimensional component from layers of printing ink, wherein for each slice a layer is printed, wherein each layer is obtained through a targeted placement of droplets of printing ink at least partially side by side according to the provided printing patterns, wherein, depending on the approximation error e, for at least one slice, the printing pattern is adjusted such that the adjusted printing pattern comprises a first region with a first sub-pattern and a second region with a second sub-pattern, wherein the first sub-pattern corresponds to a first density of deposited droplets and the second sub-pattern corresponds to a second density of deposited droplets, wherein the first density is higher than the second density.

As detailed above, through the adjustment of the printing pattern, a better approximation of the intended shape is obtained and the absolute value of the resulting approximation error e hence reduced. In this way, an optical component of enhanced optical quality is provided. Similar to using sub-patterns corresponding to droplets of differing volume, using sub-patterns with differing droplet density gives more flexibility to the approximation, resulting in a reduced absolute value of the approximation error e and hence an optical component of increased quality. Preferably, the adjusted printing pattern provides for at least one slice with a first height h₁ in the region of the first sub-pattern and a second height h₂ in the region of the second sub-pattern, wherein h₁ is larger than h₂. Particular preferably, h₁=h, i.e. the first density equals the density encoded in the original printing pattern of the at least one slice.

The method generalizes to more than two sub-patterns in order to further increase accuracy straightforwardly.

An error threshold is preferably defined e.g. depending on the desired balance between printing speed and printing accuracy. In this way, the balance between speed and accuracy can be advantageously defined. Preferably, adjustment of the printing pattern is reserved to those slices, wherein the approximation error e or its absolute value exceed the error threshold.

According to a preferred embodiment, the first and second sub-patterns are adjusted such that the absolute value of the approximation error e of the at least one slice is reduced through the adjustment of the printing pattern. Preferably, the first sub-pattern is restricted to those regions of the at least one slice where the height of the approximate shape is lower or equal to the height of the intended shape and the second sub-pattern is restricted to those regions of the at least one slice where the height of the approximate shape exceeds the height of the intended shape.

According to a preferred embodiment, the second region comprises the edges of the at least one slice. When approximating the optical component, in particular when approximating convex sections of optical components, the edges of the slices generally extend over the intended shape, i.e. a surplus of volume is created in these areas. By providing a second sub-pattern at the edges, wherein the second sub-pattern comprises droplets of a reduced volume, a region of reduced height h₂ is advantageously provided and a better approximation obtained. The second sub-pattern hence introduces an additional step at the edges of the at least one slice.

According to a preferred embodiment, the printing pattern comprises a black-and-white pattern, wherein black pixels correspond to volume elements on which droplets of printing ink are to be deposited and white pixels correspond to volume elements on which no droplets of printing ink are to be deposited and wherein the first sub-pattern comprises a first density of black pixels and the second sub-pattern comprises a second density of black pixels.

According to a preferred embodiment, the first region comprises only black pixels and the second region comprises a checkerboard pattern.

According to a preferred embodiment, the second sub-pattern is dithered. Dithering yields a particularly simple method for encoding a desired height h₂ in terms of a sub-pattern of black and white pixels. Hence, a fast and efficient way for adjusting the printing pattern of the at least one slice is advantageously provided.

According to a preferred embodiment, the layer corresponding to the at least one slice is pin cured with an adjusted pinning energy, wherein the pinning energy allows a smooth transition of the deposited droplets. In this way, unwanted optical artefacts are advantageously reduced or entirely avoided.

According to a preferred embodiment, a slice offset is added to the slicing. Standard slices are fitted to the intended shape randomly. This results in an approximation error e between the intended and the approximate shape, being reflected in detrimental deviations between the intended shape and the printed shape. By adding a slice offset, these errors and the resulting deviations are reduced. Preferably, the slice offset is chosen such that the absolute value of the approximation error e is minimal.

### BRIEF DESCRIPTION OF THE DRAWINGS

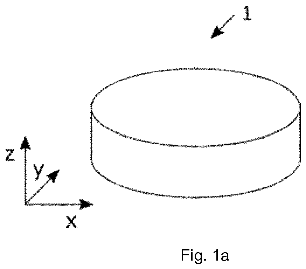

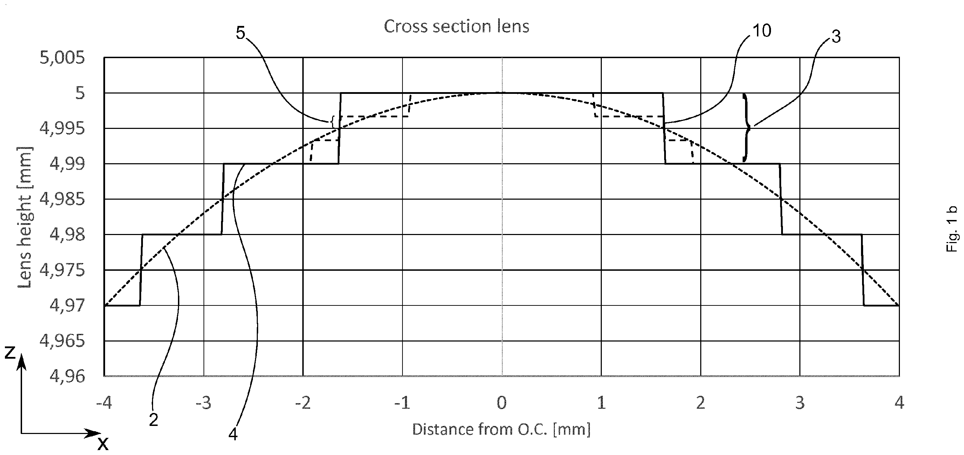

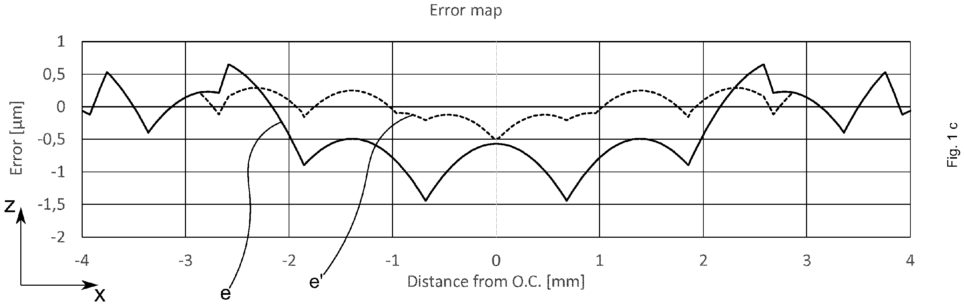

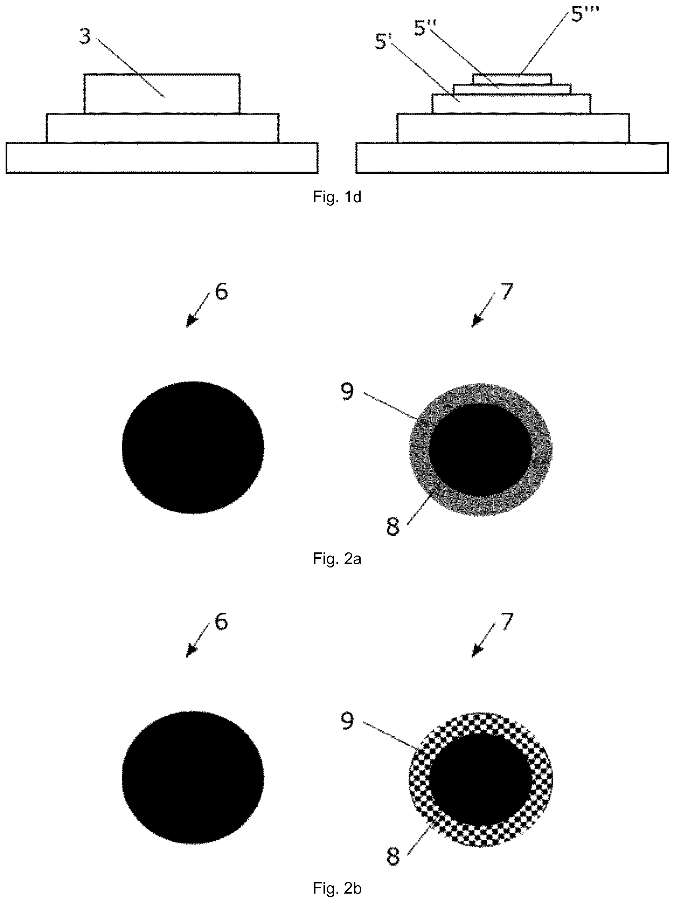

**Figures 1a****,** **1b****,** **1c** **and** **1d** schematically illustrate a printing method according to an exemplary embodiment of the present invention.
**Figures 2a and 2b** schematically illustrate a printing method according to an exemplary embodiment of the present invention. **Figure 2a** schematically illustrates a printing pattern comprising a first and a second sub-pattern corresponding to the deposition of droplets of differing volumes. **Figure 2b** schematically illustrates a printing pattern comprising a first and second sub-pattern corresponding to the deposition of droplets with differing droplet density.

### DETAILED DESCRIPTION

The present invention will be described with respect to particular embodiments and with target to certain drawings but the invention is not limited thereto but only by the claims. The drawings described are only schematic and are non-limiting. In the drawings, the size of some of the elements may be exaggerated and for illustrative purposes may not be drawn to scale.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In **Figures 1a****,** **1b****,** **1c** **and** **1d** a printing method according to an exemplary embodiment of the present invention is schematically illustrated. The present invention refers to a method for printing a three-dimensional optical component 1, in particular an ophthalmic lens. The optical component 1 is illustrated in **Figure 1a****.** According to the present invention, the intended three-dimensional shape 2 of the optical component 1 is virtually sliced into two-dimensional slices 3 of a height h, resulting in an approximate shape 4, see the sectional view of **Figure 1a****.** **Figure 1b** shows a sectional view of the optical component 1 in the x-z-plane. Each slice is defined by its height h and its base area, wherein the height h preferably is the extension of a slice 3 along the z-direction and the base area its extension in the x-y-plane. In the case of an optical component being an ophthalmic lens, for example, the slices 3 are preferably cylinders of height h. Preferably, the radii of these cylinders differ for each slice 3 such that a best approximation to the intended shape 4 is achieved. It is clear that the quality of the approximation is defined be the height h of the slicing. The smaller h, i.e. the thinner the slices 3, the better the approximation. The height h cannot be chosen arbitrarily small. First of all, the height h is limited by the available and printable droplet volume. This in turn is defined through the ejection nozzles of the print head in use and additionally limited through physical constraints such as properties of the used printing ink and flight properties of the droplets. Additionally, a smaller height h, i.e. thinner slices 3, increases the printing time, making the print less efficient.

The methods according to the present invention overcome these difficulties by providing a printing method, wherein the balance between printing speed and printing accuracy can be adjusted. To this end, the difference between the intended shape 2 and the approximate shape 4 is quantified. According to the invention, the difference between the intended shape 2 and the approximate shape 4 is quantified through the approximation error e, see **Figure 1c**. Preferably, the difference between the intended shape 2 and the approximate shape 4 is determined for multiple, particularly preferably all, slices 3 obtained through the virtual slicing. The approximation error e is e.g. calculated as the difference between intended shape 2 and approximate shape 4 for each point of the base area of that slice 3, i.e. the approximation error e(x, y, z=z₀) for one slice 3 is a function of x and y. Alternatively, the difference between intended and approximate shape 2, 4 is calculated for at least one section, particularly preferably a vertical section, of the optical component 1, i.e. the approximation error e is a function of either x of y, e(x, y=y₀, z=z₀) or e(x=x₀, y, z=z₀). The approximation error e alternatively comprises a single value, e.g. obtained through averaging of the approximation error e(x, y, z=z₀), e(x, y=y₀, z=z₀) or e(x=x₀, y, z=z₀). Preferably, the approximation error e of a slice 3 is calculated for a fixed z-coordinate, e.g. corresponding to the height h of the slice 3, e.g. e(x, y, z=h), e(x, y=y₀, z=h) or e(x=x₀, y, z=h). By way of example, the approximation error e(x, y=y₀, z=h) as a function of x at the height h of the slices 3 is shown in **Figure 1c****.** As is apparent in this example, the approximation is particularly pronounced in the vicinity and at the optical center of the optical component 1 and at the edges 10 of the slices 3. According to the invention, depending on the approximation error e, the layer corresponding to at least one slice 3 is printed in multi-pass mode, i.e. the at least one slice 3 is divided into multiple sub-slices 5 and their corresponding sublayers are printed in consecutive sublayer printing steps. In this way, a better approximation of the intended shape 4 is advantageously achieved and the quality of the optical component 1 improved. Preferably, an error threshold is defined and the at least one slice 3 is selected depending on the approximation error e as the slice 3 wherein the approximation error or its absolute value exceeds a defined error threshold. The error threshold advantageously allows the definition of a desired balance between speed and accuracy. Preferably, the number of sub-slices 5 and the height of the respective sub-slices 5 are chosen such that the absolute value of the approximation error e of the at least one slice 3 is reduced, see the improved approximation error e in **Figure 1c****.** Particular preferably, the height of the sub-slices 5 does not increase from the first printed sub-slice 5 to the last printed sub-slice 5, i.e. the height of two sub-slices 5 printed consecutively decreases or is the same. For example, the first sub-slice 5' is a cylinder of height h₁ and radius r₁. The second sub-slice 5" is a cylinder of height h₂<h₁ and radius r₂<r₁ and the third sub-slice 5'" is a cylinder of height h₃=h₂ and radius r₃<r₂, see **Figure 1d** for an example with h₁=0.66h, h₂=0.33h and h₃=0.33h. The left panel of **Figure** 1d depicts the original slicing. The slicing according to a preferred embodiment of the present invention is shown in the right panel of **Figure 1d****.** Through the division of the at least one slice 3 into sub-slices of decreasing or equal height, a better approximation to convex sections of the optical component 1 can advantageously be achieved. This is particularly relevant when printing ophthalmic lenses. The height of the sub-slices 5', 5", 5"' is preferably converted into a volume of printing ink deposited when printing the respective sub-layer. Preferably, the volume of deposited printing ink is determined through the density of deposited droplets. For example, the density of deposited droplets of a sub-layer with a sub-slice height hᵢ=x·h is x times the density of deposited droplets of a regular layer of slice height h. E.g. the density of deposited droplets is 66%, 33% and 33% of the density used for printing the regular slices 3 of height h, respectively for the first, second and third sublayer of the example of **Figure 1d****.** The printing patterns of the multi-pass slice are, for example, randomly generated. Preferably, the printing pattern for each sub-slice 5', 5", 5'" comprises a grid wherein each grid cell corresponds to a voxel, i.e. a unit volume, of the sub-slice 5', 5", 5"'. Grid cells are color coded to contain information about whether a droplet of printing ink is to be deposited at the corresponding voxel. E.g. the grid cells are either black or white, wherein black grid cells correspond to voxels of the sub-slice 5', 5", 5'" on which a droplet of printing ink is to be deposited during sub-slice printing and white grid cells correspond to voxels on which no printing ink is to be deposited during sub-slice printing. E.g. the printing patterns of the sub-slice 5', 5", 5'" are generated through conversion of a greyscale image into a black-and-white pattern, e.g. through halftoning. In a preferred embodiment, random generation of the sub-slice printing pattern comprises a step of converting a greyscale image to a black-and-white pattern using any of the known algorithms for this conversion. The conversion of the greyscale image into a black-and-white pattern is preferably carried out through halftoning. Halftoning comprises a simulation of the continuous greyscale image through a pattern of black dots of either varying size and/or spacing on a white background.
Additionally, a slice offset is preferably added to the slicing. The slice offset constitutes an additional parameter with respect to which the approximation can be improved. Preferably, the slice offset is chosen such that the absolute value of the approximation error e is reduced.
Preferably, the at least one multi-pass layer is pin cured with a reduced pinning intensity as compared to the layers which are not printed in multi-pass mode. For example, the at least one layer is printed with 15% pinning intensity.

In **Figures 2a and 2b****,** a printing method according to an exemplary embodiment of the present invention is schematically illustrated. According to the invention, depending on the approximation error e, for at least one slice 3, the printing pattern 6 is adjusted such that the adjusted printing pattern 7 comprises a first sub-pattern 8 determining volume elements at which droplets of a first volume are to be deposited and a second sub-pattern 9 determining volume elements at which droplets of a second volume are to be deposited, wherein the first volume is larger than the second volume, see **Figure 2a****.** Adjusting the printing pattern 6 of the at least one slice 3 such that the adjusted printing pattern 7 comprises a first and a second sub-pattern 8, 9, respectively, advantageously increases the flexibility of the approximation, resulting in an optical component 1 of increased optical quality. For the first and the second sub-pattern 8, 9, droplets of a first and second volume are deposited on a first and a second region of the layer corresponding to the at least one slice 3. Due to the differing volume of the deposited droplets, the first and the second region preferably exhibit a first and a second height. It is preferred that the height of the first region comprising the droplets of the first volume is larger than the height of the second region comprising the droplets of the second volume. Preferably, the first and second sub-pattern 8, 9 are adjusted such that the absolute value of the approximation error e of the at least one slice 3 is reduced through the adjustment of the printing pattern 6. Particularly preferably, the second sub-pattern 9 comprises the edges 10 of the at least one slice 3. Hence, at the edges 10 of the at least one slice 3 a lower volume of printing ink is preferably deposited. In this way, additional steps can be provided, improving the approximation to the intended shape 4. According to a preferred embodiment, the first sub-pattern 8 comprises a black pattern and the second sub-pattern 9 comprises a greyscale pattern, wherein black pixels refer to volume elements on which droplets of the first volume are deposited, grey pixels of the pattern refer to volume elements on which droplets of the second volume are deposited and white pixels refer to volume elements on which no droplets are deposited. Through converting regions from black into greyscale patterns, the printing pattern 6 of the at least one slice 3 can particularly efficiently be adjusted to yield the adjusted printing pattern 7. Additionally, a slice offset is preferably added to the slicing. The slice offset constitutes an additional parameter with respect to which the approximation can be improved. Preferably, the slice offset is chosen such that the absolute value of the approximation error e is reduced.

According to the invention, depending on the approximation error e, for at least one slice 3, the printing pattern 6 is adjusted such that the adjusted printing pattern 7 comprises a first sub-pattern 8 and a second sub-pattern 9, wherein the first sub-pattern 8 corresponds to a first density of deposited droplets and the second sub-pattern 9 corresponds to a second density of deposited droplets, wherein the first density is higher than the second density, see **Figure 2b****.** The adjustment of the printing pattern advantageously increases the flexibility and hence accuracy of the approximation, resulting in an optical component 1 of increased quality. According to a preferred embodiment, the first and second sub-patterns 8, 9 are adjusted such that the absolute value of the approximation error e of the at least one slice 3 is reduced through the adjustment of the printing pattern 6. Preferably, the first and second sub-patterns 8, 9 of a first and second density of deposited droplets correspond to first and second regions of the corresponding layer with a first and second height, respectively. Preferably, the first height is larger than the second height. In this way, additional steps can be provided, improving the approximation. Preferably, the second sub-pattern 9 comprises the edges 10 of the at least one slice 3. The printing pattern 7 comprises a black-and-white pattern, wherein black pixels correspond to volume elements on which droplets of printing ink are to be deposited and white pixels correspond to volume elements on which no droplets of printing ink are to be deposited and wherein the first sub-pattern 8 comprises a first density of black pixels and the second sub-pattern 9 comprises the second density of black pixels. Hence, a particularly efficient method for the adjustment of the printing pattern 6 is provided. For example, the first sub-pattern 8 comprises only black pixels and the second sub-pattern 9 comprises a checkerboard pattern. In this way, a first region of the corresponding layer of height h and a second region of a height h₂<h are provided. This is particularly beneficial when printing optical components 1 with convex sections. Preferably, the second sub-pattern 9 is dithered. The second sub-pattern 9 is e.g. obtained from a greyscale image through dithering. According to a preferred embodiment, the layer corresponding to the at least one slice 3 is pin cured with an adjusted pinning energy, wherein the pinning energy allows a smooth transition of the deposited droplets. Additionally, a slice offset is preferably added to the slicing. The slice offset constitutes an additional parameter with respect to which the approximation can be improved. Preferably, the slice offset is chosen such that the absolute value of the approximation error e is reduced.

### KEY TO FIGURES

- 1: Optical component
- 2: Intended shape
- 3: Slice
- 4: Approximate shape
- 5: Sub-slice
- 6: Printing pattern
- 7: Adjusted printing pattern
- 8: First sub-pattern
- 9: Second sub-pattern
- 10: Edge of the slice

- e: Approximation error
- e': improved approximation error
- h: Height of slice

## Claims

1. Method for printing a three-dimensional optical component (1), in particular an ophthalmic lens, comprising the following steps:
- Virtually slicing the intended three-dimensional shape (2) of the optical component (1) into two-dimensional slices (3) of a height h, resulting in an approximate shape (4),
- Determining an approximation error e quantifying the difference between the intended shape (2) and the approximate shape (4),
- Building up the three-dimensional component (1) from layers of printing ink, wherein for each slice (3) a layer is printed, wherein each layer is obtained through a targeted placement of droplets of printing ink at least partially side by side
**characterized in that,** depending on the approximation error e, the layer corresponding to at least one slice (3) is printed in multi-pass mode, i.e. the slice (3) is divided into multiple sub-slices (5) and their corresponding sublayers are printed in consecutive sublayer printing steps.

2. Method according to claim 1, wherein the number of sub-slices (5) and the height of the respective sub-slices (5) are chosen such that the approximation error e of the at least one slice (3) is reduced.

3. Method according to one of the preceding claims, wherein the height of the sub-slices (5) does not increase from the first printed sub-slice (5) to the last printed sub-slice (5), i.e. the height of two sub-slices (5) printed consecutively decreases or is the same.

4. Method according to one of the preceding claims, wherein the at least one multi-pass layer is pin cured with a reduced pinning intensity as compared to the layers which are not printed in multi-pass mode.

5. Method according to one of the preceding claims, wherein an error threshold is defined and multi-pass printing is reserved to the layers corresponding to slices (3) wherein the approximation error e or its absolute value exceeds the error threshold.

6. Method for printing a three-dimensional optical component (1), in particular an ophthalmic lens, comprising the following steps:
- Virtually slicing the intended three-dimensional shape (2) of the optical component (1) into two-dimensional slices (3) of a height h, resulting in an approximate shape (4),
- Determining an approximation error e quantifying the difference between the intended shape (2) and the approximate shape (4),
- Providing a printing pattern (6) for each slice determining at which volume elements (voxels) droplets of printing ink are deposited,
- Building up the three-dimensional component (1) from layers of printing ink, wherein for each slice (3) a layer is printed, wherein each layer is obtained through a targeted placement of droplets of printing ink at least partially side by side according to the provided printing patterns (6),
**characterized in that,** depending on the approximation error e, for at least one slice (3), the printing pattern (6) is adjusted such that the adjusted printing pattern (7) comprises a first sub-pattern (8) determining volume elements at which droplets of a first volume are to be deposited and a second sub-pattern (9) determining volume elements at which droplets of a second volume are to be deposited, wherein the first volume is larger than the second volume.

7. Method according to claim 6, wherein the first and second sub-pattern (8, 9) are adjusted such that the approximation error e of the at least one slice (3) is reduced through the adjustment of the printing pattern (6).

8. Method according to one of the claims 6 to 7, wherein the second sub-pattern (9) comprises the edges (10) of the at least one slice (3).

9. Method according to one of the claims 6 to 8, wherein the first sub-pattern (8) comprises a black pattern and the second sub-pattern (9) comprises a greyscale pattern, wherein black pixels refer to volume elements on which droplets of the first volume are deposited, grey pixels of the pattern refer to volume elements on which droplets of the second volume are deposited and white pixels refer to volume elements on which no droplets are deposited.

10. Method for printing a three-dimensional optical component (1), in particular an ophthalmic lens, comprising the following steps:
- Virtually slicing the intended three-dimensional shape (2) of the optical component (1) into two-dimensional slices (3) of a height h, resulting in an approximate shape (4),
- Determining an approximation error e quantifying the difference between the intended shape (2) and the approximate shape (4),
- Providing a printing pattern (6) for each slice (3) determining at which volume elements (voxels) droplets of printing ink are deposited,
- Building up the three-dimensional component (1) from layers of printing ink, wherein for each slice (3) a layer is printed, wherein each layer is obtained through a targeted placement of droplets of printing ink at least partially side by side according to the provided printing patterns (6),
**characterized in that,** depending on the approximation error e, for at least one slice (3), the printing pattern (6) is adjusted such that the adjusted printing pattern (7) comprises a first sub-pattern (8) and a second sub-pattern (9), wherein the first sub-pattern (8) corresponds to a first density of deposited droplets and the second sub-pattern (9) corresponds to a second density of deposited droplets, wherein the first density is higher than the second density.

11. Method according to claim 10, wherein the first and second sub-patterns (8, 9) are adjusted such that the approximation error e of the at least one slice (3) is reduced through the adjustment of the printing pattern (6).

12. Method according to one of the claims 10 to 11, wherein the second sub-pattern (9) comprises the edges (10) of the at least one slice (3).

13. Method according to one of the claims 10 to 12, wherein the printing pattern (7) comprises a black-and-white pattern, wherein black pixels correspond to volume elements on which droplets of printing ink are to be deposited and white pixels correspond to volume elements on which no droplets of printing ink are to be deposited and wherein the first sub-pattern (8) comprises a first density of black pixels and the second sub-pattern (9) comprises the second density of black pixels.

14. Method according to claim 13, wherein the first sub-pattern (8) comprises only black pixels and the second sub-pattern (9) comprises a checkerboard pattern.

15. Method according to one of the claims 13 to 14, wherein the second sub-pattern (9) is dithered.

16. Method according to one of the claims 10 to 15, wherein the layer corresponding to the at least one slice (3) is pin cured with an adjusted pinning energy, wherein the pinning energy allows a smooth transition of the deposited droplets.

17. Method according to one of the claims 6 to 16, wherein an error threshold is defined and the adjustment of the printing pattern (6) is reserved to slices (3) wherein the approximation error e or its absolute value exceeds the error threshold.

18. Method according to one of the preceding claims, wherein a slice offset is added to the slicing.
